# EUROPEAN PATENT SPECIFICATION

(11) **EP 4 370 582 B1**
(45) Date of publication and mention of the grant of the patent: **04.06.2025**
(21) Application number: 22733936.3
(22) Date of filing: 14.06.2022
(51) Int. Cl.: C08G 63/52, C08G 63/676, C08G 63/685, C08G 63/91, C11D 3/37

(54) **POLYESTER COMPOUNDS AND THEIR USES**
POLYESTERVERBINDUNGEN UND DEREN VERWENDUNGEN
COMPOSÉS DE POLYESTER ET LEURS UTILISATIONS

(30) Priority: 13.07.2021 EP 21185403
(43) Date of publication of application: 22.05.2024
(73) Proprietor: BASF SE, 67056 Ludwigshafen am Rhein (DE)
(72) Inventor: WOLF, Elena, 67056 Ludwigshafen (DE); MUELLER-CRISTADORO, Anna Maria, 49448 Lemfoerde (DE); SCHADE, Christian, 67056 Ludwigshafen (DE); WOHLMUTH, Catharina, 67056 Ludwigshafen (DE); ESPER, Claudia, 67056 Ludwigshafen (DE); BRUCHMANN, Bernd, 67056 Ludwigshafen (DE); TUERK, Holger, 67056 Ludwigshafen (DE)
(74) Representative: BASF IP Association
(86) International application number: PCT/EP2022/066242
(87) International publication number: WO 2023/285063

(56) References cited:
- EP-A1- 1 403 245
- US-A1- 2006 011 295
- US-A1- 2009 047 225
- US-B2- 8 846 599

## Description

The present invention is directed towards polyesters comprising at least one diacid-based building block, at least one diol-based building block and at least one polyol-based building block, wherein the diacid-based building block comprises a group of formula (I) 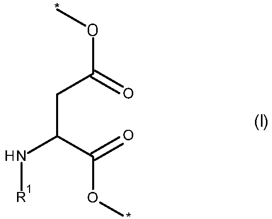
wherein R¹ is a group according to the general formula CH₂-CH₂-O(AO)ₓ-X¹, with x being a number from zero to 75, X¹ being methyl or hydrogen and AO being alkylene oxide selected from ethylene oxide and combinations of ethylene oxide with at least one of propylene oxide and butylene oxide,
wherein polyol building blocks are derived from compounds bearing y hydroxyl groups per molecule, and y being a least three,
and wherein the asterisks indicate bonds to diol or polyol building blocks through the ester oxygen atoms,
wherein the molar ratio of diacid-based building blocks to the sum of diol building blocks and polyol building blocks, the latter being multiplied with 2/y, is in the range from 2:1 to 1:2.

Polyaspartic acid esters are polymers containing mono-N-substituted aspartic acid units in their structure. Despite the name such polyesters are not synthesized from aspartic acid but from unsaturated polyesters (UPE) and primary amines using the Aza-Michael addition. The product of this reaction contains a polyester backbone with side chains connected to the backbone through secondary amine groups.

US 2005/0059791 A1 describes flexible polyaspartic esters formed, e.g., by the reaction of diethyl maleate and 1,4-butanediol and subsequent addition of polyamines, like 1,6-hexanediamine. US 2006/0011295 A1 relates to functional aspartic ester compounds and their use in adhesive, sealant, and coating compositions.

US 8 846 599 B2 concerns branched polyesters with sulfonate groups.

In laundry formulations, it is a common challenge to disperse solid inorganic particles such as clay. Inorganic particles may stem from soilings, for example clay, silica and ion oxide. In the course of the laundering process, they are to be removed from the laundry, dispersed in the washing liquor and removed together with the washing liquor. Multiple structures have been proposed, such as alkoxylated poly-triethanolamines, see, e.g., WO 2009/060409. However, the generally proposed compounds are not biodegradable.

Detergent formulators are continuously faced with the task of developing improved products to remove a broad spectrum of soils and stains from fabrics and hard surfaces. The removal of particulate stains has been a particularly challenging problem. This challenge has been accentuated by the recent high interest and motivation to employ sustainable and biobased and/or biodegradable components for laundry detergents and manual dish wash. This leads to a high market demand for detergent ingredients that have a satisfying performance profile combined with significantly improved biodegradability.

It was thus an objective of the present invention to provide additives for laundry formulations that exhibit good properties in laundry application, for example with respect to cleaning properties and especially with respect to inorganic particle dispersion, and that show biodegradability. It was further an objective of the present invention to provide a process to manufacture such additives, and it was an objective to provide laundry formulations with good solid inorganic particle dispersion properties that do not require the use of additives that are not biodegradable.

Accordingly, the polyesters as defined at the outset have been found, hereinafter also referred to as inventive polyesters. Inventive polyesters are described in more detail below.

Inventive polyester comprise at least one diacid-based building block, at least one diol-based building block and at least one polyol-based building block, wherein the diacid-based building block comprises a group of formula (I)

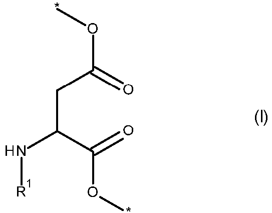

In formula (I), the asterisks indicate bonds to diol or polyol building blocks through the ester oxygen atoms.

Preferably, inventive polyesters comprise more than one building block according to formula (I) per molecule, for example 2 to 20, preferably 3 to 10.

It is understood that inventive polyesters are usually not one pure compound but mixtures of various compounds comprising the same building blocks but arranged differently, and they have a molecular weight distribution, see below.

R¹ is a group according to the general formula CH₂-CH₂-O(AO)ₓ-X¹, with x being a number from zero to 75, preferably zero or 12 to 30. X¹ may be methyl, and preferably, X¹ is hydrogen.

AO is alkylene oxide selected from ethylene oxide, CH₂CH₂-O, hereinafter also referred to as EO, and combinations of ethylene oxide with at least one of propylene oxide, CH₂CH(CH₃)-O, hereinafter also referred to as PO, and butylene oxide, CH₂CH(C₂H₅)-O, also referred to as BuO.

In one embodiment of the present invention, x is zero or in the range of from 1 to 30 and the majority of AO in R¹ are ethylene oxide, more preferably x is in the range of from 12 to 30 and the majority of all AO are EO. For example, R¹ may have the formula (EO)ₓ₁(PO)ₓ₂-H with x1 being in the range of from 8 to 20 and x2 being in the range of from 1 to 5.

In specific embodiments, x is in the range of from 12 to 25 and all AO are EO.

Especially in embodiments with x greater than 2, for example from 2 to 75, the values of x indicate average values and referring to the number average.

The diol building blocks may be based on aliphatic or cycloaliphatic diols, for example C₂-C₈-alkandiols or C₄-C₇-cycloalkandiols, non-substituted or substituted with one or more methyl or ethyl groups, preferably C₂-C₈-alkandiols. The diol building blocks may be derived from one or at least two different aliphatic or cycloaliphatic diols, one is preferred. In this context, "based on" means that the majority of the hydroxyl groups is comprised in inventive polyesters in esterified form.

Examples of C₂-C₈-alkandiols are ethylene glycol, propane-1,2-diol, propane-1,3-diol, 2,2-dimethyl-propane-1,3-diol, butane-1,2-diol, butane-1,3-diol, butane-1,4-diol, butane-2,3-diol, pentane-1,2-diol, pentane-1,3-diol, pentane-1,4-diol, pentane-1,5-diol, pentane-2,3-diol, pentane-2,4-diol, hexane-1,2-diol, hexane-1,3-diol, hexane-1,4-diol, hexane-1,5-diol, hexane-1,6-diol, hexane-2,5-diol, heptane-1,2-diol 1,7-heptanediol, 1,8-octanediol, 1,2-octanediol, 1,9-nonanediol, 1,10-decanediol, 1,2-decanediol, 1,12-dodecanediol, 1,2-dodecanediol, 1,5-hexadiene-3,4-diol, 2-methyl-2,4-pentanediol, 2,4-dimethyl-2,4-pentanediol, 2-ethyl-1,3-hexanediol, 2,5-dimethyl-2,5-hexanediol, 2,2,4-trimethyl-1,3-pentanediol, pinacol. Preferred examples are ethylene glycol, triethylene glycol, diethylene glycol, 1,4-butanediol, 1,6-hexandiol, neopentylglycol, 2,5-dimethyl-2,5-hexandiol and 2-ethyl-1,3-hexandiol.

Examples of C₄-C₇-cycloalkandiols are 1,2-cyclopentandiol, 1,3-cyclopentandiol, 1,2-cyclohexandiol, 1,3-cyclohexandiol, 1,4-cyclohexandiol, 1,2-cycloheptandiol. The aforementioned are usually present as mixtures of isomers.

In another embodiment of the present invention, diol building blocks are based on diethylene glycol, triethylene glycol, tetraethylene glycol, or on polyethylene glycols, for example with an average molecular weight Mₙ of from 200 to 500 g/mol. In another embodiment of the present invention, diol building blocks are based on dipropylene glycol, tripropylene glycol, tetrapropylene glycol, or on polypropylene glycols, for example with an average molecular weight Mₙ of from 280 to 750 g/mol.

Polyol building blocks are derived from compounds bear at least three hydroxyl groups per molecule, for example three ("triol", y = 3) or four ("tetrol", y = 4) or six ("hexol", y = 6), triols being preferred. In the context of the present invention, the term "hydroxyl groups" refers to primary or secondary groups of alcohols. Examples of triol building blocks are based on glycerol, butane-1,2,3-triol, butane-1,2,4-triol, pentane-1,2,3-triol, pentane-1,2,4-triol, pentane-1,2,5-triol, hexane-1,2,3-triol, hexane-1,2,4-triol, hexane-1,2,5-triol, hexane-1,2,6-triol, hexane-1,3,4-triol, hexane-1,3,5-triol, hexane-1,3,6-triol, hexane-1,4,5-triol, tetrahydrofuran-2,3,4-triol, tetrahydrofuran-2,3,5-triol, 2-(hydroxymethyl)tetrahydrofuran-3,4-diol, 5-(hydroxymethyl)tetrahydrofuran-2,4-diol, (3-hydroxytetrahydrofuran-2,5-diyl)dimethanol, 1-(3-hydroxytetrahydrofuran-2-yl)ethane-1,2-diol, 1-(4-hydroxytetrahydrofuran-2-yl)ethane-1,2-diol, 2-(2-hydroxyethyl)tetrahydrofuran-3,4-diol, 2-(1-hydroxyethyl)tetrahydrofuran-3,4-diol, 6-(hydroxymethyl)tetrahydro-2H-pyran-2,3-diol, 6-(hydroxymethyl)tetrahydro-2H-pyran-2,4-diol, 6-(hydroxymethyl)tetrahydro-2H-pyran-2,5-diol, 1, trimethylolmethane, 1,1,1-trimethylolethane and 1,1,1-trimethylolpropane, as well as ethoxylated, propoxylated and/or butoxylated derivatives thereof and on mixtures of at least two of the foregoing. Preferred examples of triol building blocks are based on glycerol, butane-1,2,4-triol, n-pentane-1,2,5-triol, n-pentane-1,3,5-triol, n-hexane-1,2,6-triol, n-hexane-1,2,5-triol, n-hexane-1,3,6-triol, 1,1,1-trimethylolbutane, 1,1,1-trimethylolpropane ("TMP"), 1,1,1-trimethylolethane, trimethylolmethane and on mixtures of at least two of the foregoing. In this context, "based on" and "derived from" means that the majority of the hydroxyl groups is comprised in inventive polyesters in esterified form.

Further examples of triol building blocks are derived from ethoxylates and propoxylates of any of the foregoing, for example ethoxylates and propoxylates of glycerol or of TMP. In such embodiments, the molar ratio of ethoxylate or propoxylate per mole of glycerol or TMP, respectively, is in the range of from 1:1 to 50:1.

Examples of tetrol building blocks are derived from pentaerythritol, diglycerol, trimethylolpropane-dimer, erythritol, or ethoxylates, propoxylates or mixed ethoxylate/propoxylate oligomers and polymers based on the aforementioned tetrols as starting components. More preferably, tetrol building blocks are derived from pentaerythritol and diglycerol.

An example of hexol building blocks are derived from sorbitan.

In inventive polyesters, the molar ratio of diacid-based building blocks to the sum of diol building blocks and polyol building blocks, the latter being multiplied with 2/y, is in the range from 2:1 to 1:2, preferably from 3:2 to 2:3, more preferably from 1.2 : 1 to 1 : 1.2, even more preferably from 1.1 :1 to 1 : 1.1, especially 1:1.

Thus, (mol diacid-based building blocks) / [(mol diol-based building block) + 2/y (mol polyol-based building block)] is in the range of from 2:1 to 1:2, preferably from 3:2 to 2:3, more preferably from 1.2 : 1 to 1 : 1.2, even more preferably from 1.1 :1 to 1 : 1.1, especially 1:1.

In one embodiment of the present invention, the molar ratio of diol building blocks to polyol building blocks, multiplied with 2/y, is 1:1 to 4:1.

In a preferred embodiment of the present invention, the polyol building blocks are all triol building blocks, and the molar ratio of diol building blocks to triol building blocks - multiplied with 2/3 - is in the range from 2:1 to 1:1.5, more preferably from 1.2 : 1 to 1 : 1.2, even more preferably from 1.1 :1 to 1 : 1.1, especially 1:1.

In one embodiment of the present invention, the average molecular weight Mₙ of inventive polyesters is in the range of from 3,000 to 10,000 g/mol. The average molecular weight Mₙ may be determined by gel permeation chromatography ("GPC"). Suitable mobile phases are hexafluoroisopropanol ("HFIP"), dimethyl acetamide ("DMAc"), tetrahydrofuran ("THF") and water.

In one embodiment of the present invention, the average molecular weight M_{w} of inventive polyesters is in the range of from 5,000 to 30,000 g/mol. The average molecular weight M_{w} may be determined by GPC. Suitable mobile phases are HFIP, DMAc, THF and water.

In one embodiment of the present invention, the polydispersity M_{w}/Mₙ of inventive polyesters is in the range of from 1 : 10, preferably 1.5 to 5.

In one embodiment of the present invention, unsaturated polyesters - after step (a) - have a hydroxyl number the range of from 20 to 150 mg KOH/g in accordance with DIN 53240 (2016).

In one embodiment of the present invention, inventive polyesters have an overall amino number the range of from 30 to 50 mg KOH/g in accordance with ASTM D2074-07.

In one embodiment of the present invention, the glass transition temperatures of inventive polyesters is in the range of from -5 °C to 41 °C, determined by differential scanning calorimetry (DSC).

In one embodiment of the present invention, inventive polyesters bear some carbon-carbon double bonds. Such carbo-carbon double bonds preferably have an (*E*)-configuration (or translike). They may be determined by ¹H-NMR spectroscopy. In one embodiment of the present invention, the molar percentage of carbon-carbon double bonds correspond to a range of from 5 to 10 of the ester building blocks.

In one embodiment of the present invention, inventive polyesters may contain additional building blocks, for example based on alkane-dicarboxylic acids such as adipic acid, succinic acid, or glutaric acid, for example in a molar ratio of diacid-based building block according to formula (I) to alkane-dicarboxylic acids-based building blocks in the range of from 10:1 to 2:1. With respect to the molar ratio to diol and polyol building blocks, building blocks based on such alkane-dicarboxylic acids will then replace diacid-based building block according to formula (I). In a preferred embodiment, however, inventive polyesters do not contain such additional building blocks.

Preferably, inventive polyesters are free from building blocks stemming from mono-alkanols and mono-carboxylic acids.

It was found that the above-mentioned good properties can be found by using a mixture of diol and polyol in a specific range, i.e. molar ratio from 2:1 to 1:2, referring to the hydroxyl groups, in order to adjust the degree of branching in inventive polyesters. It was found that the solution viscosities of the inventive polyesters are remarkably low. In addition, inventive polyesters exhibit biodegradability.

Accordingly, another aspect of the present invention is a process for manufacturing a polyester of the present invention, said process comprising the steps of
(a) reacting an activated α,β-ethylenically unsaturated dicarboxylic acid with a mixture of at least one diol and at least one polyol, wherein the activated unsaturated dicarboxylic acid is selected from activated maleic acid and , activated itaconic acid activated fumaric acid, characterized in that the molar ratio of carboxyl groups of activated α,β-ethylenically unsaturated dicarboxylic acid to the sum of hydroxyl groups of diol and polyol is in the range from 2:1 to 1:2,
(b) reacting the product resulting from step (a) with R¹-NH₂.

Said process is hereinafter also referred to as inventive process, and its steps are also referred to as step (a) or step (b), respectively. Activated α,β-ethylenically unsaturated dicarboxylic acid and diol(s) and polyol(s) will together also be referred to as starting materials. The inventive process is described in more detail below.

In step (a), an activated α,β-ethylenically unsaturated dicarboxylic acid is reacted with a mixture of at least one diol and at least one polyol.

Examples of α,β-ethylenically unsaturated dicarboxylic acids are maleic acid and , itaconic acid fumaric acid, maleic acid being preferred. Performing step (a) with the acid itself would require drastic reaction conditions, therefore, step (a) is performed with a so-called activated α,β-ethylenically unsaturated dicarboxylic acid. Activation may be by using the dichloride of the respective α,β-ethylenically unsaturated dicarboxylic acid, C₁-C₄-alkyl diesters of α,β-ethylenically unsaturated dicarboxylic acid or - in the case of maleic acid - the anhydride. Particularly preferred examples are the dimethyl ester of maleic acid, the diethyl ester of maleic acid and maleic anhydride.

Examples of suitable diols and polyols have been disclosed above. Preferred examples are ethylene glycol, diethylene glycol, triethylene glycol, tetraethylene glycol, and polyethylene glycols, for example with an average molecular weight Mₙ of from 200 to 500 g/mol. In another embodiment of the present invention, diols are selected from dipropylene glycol, tripropylene glycol, tetrapropylene glycol, or on polypropylene glycols, for example with an average molecular weight Mₙ of from 280 to 750 g/mol.

Examples of polyols are selected from compounds bearing at least three hydroxyl groups per molecule, for example three ("triol", y = 3) or four ("tetrol", y = 4) or six ("hexol", y = 6), triols being preferred. Examples of preferred triols are glycerol, butane-1,2,4-triol, n-pentane-1,2,5-triol, n-pentane-1,3,5-triol, n-hexane-1,2,6-triol, n-hexane-1,2,5-triol, n-hexane-1,3,6-triol, 1,1,1-trimethylolbutane, 1,1,1-trimethylolpropane ("TMP"), 1,1,1-trimethylolethane, trimethylolmethane and mixtures of at least two of the foregoing. In this context,

Further examples of triols are ethoxylates and propoxylates of any of the foregoing, for example ethoxlates of glycerol or of TMP. In such embodiments, the molar ratio of ethoxylate or propoxylate per mole of glycerol or TMP, respectively, is in the range of from 1:1 to 50:1.

Examples of tetrols are pentaerythritol, diglycerol, trimethylolpropane-dimer, erythritol, or ethoxylates, propoxylates or mixed ethoxylate/propoxylate oligomers and polymers based on the aforementioned tetrols as starting components. More preferably, tetrols are selected from pentaerythritol and diglycerol.

An example of hexols is sorbitan.

In step (a), the molar ratio of carboxyl groups of activated α,β-ethylenically unsaturated dicarboxylic acids to the sum of hydroxyl groups of diol and polyols, is in the range from 2:1 to 1:2, preferably from 3:2 to 2:3, more preferably from 1.2 : 1 to 1 : 1.2, even more preferably from 1.1 :1 to 1 : 1.1, especially 1:1.

In one embodiment of step (a), activated alkane-dicarboxylic acids such as activated adipic acid, activated succinic acid, or activated glutaric acid, is added, for example in a molar ratio of activated α,β-ethylenically unsaturated dicarboxylic acid to activated alkane-dicarboxylic acids in the range of from 10:1 to 2:1. By addition of activated alkane-dicarboxylic acid, the overall molar ratio of activated carboxyl groups to hydroxyl groups is not altered. The activation of the carboxyl groups of alkane-dicarboxylic acids may be the same type as in α,β-ethylenically unsaturated dicarboxylic acid, especially C₁-C₄-alkyl esters and, in the case of succinic acid, the anhydride.

Step (a) may be carried out in bulk or in the presence of a solvent. Suitable examples of solvents include hydrocarbons such as paraffins or aromatics. Particularly suitable paraffins are n-heptane and cyclohexane. Particularly suitable aromatics are toluene, ortho-xylene, meta-xylene, para-xylene, xylene isomer mixtures, ethylbenzene, chlorobenzene and ortho- and metadichlorobenzene. Examples of solvents suitable in the absence of acidic catalysts include the following: ethers such as dioxane or tetrahydrofuran and ketones such as methyl ethyl ketone and methyl isobutyl ketone.

The amount of solvent may be at least 0.1% by weight, based on the mass of the starting materials to be reacted, preferably at least 1% by weight and more preferably at least 10% by weight. It is also possible to employ excesses of solvent, based on the mass of starting materials to be reacted that are employed, such as from 1.01 to 10 times, for example. Solvent amounts of more than 100 times, based on the mass of starting materials, are not advantageous, since at significantly lower concentrations of the reactants the reaction rate falls markedly, leading to uneconomically long reaction times.

Step (a) may be carried out in the presence of a water removing additive that is added at the beginning of step (a). Suitable examples include molecular sieves, particularly molecular sieve 4 Ȧ, MgSO₄ and Na₂SO₄. It is possible as well to add further water removing additive during the reaction or to replace water removing additive by fresh water removing additive. It is also possible to distill off water or alcohol formed during the reaction and to use, for example, a Dean-Stark apparatus.

Step (a) may be carried out in the absence of acidic catalyst. It is preferred to operate in the presence of an acidic inorganic, organometallic or organic catalyst or mixtures of two or more acidic catalysts.

Examples of acidic inorganic catalysts for step (a) include sulfuric acid, phosphoric acid, phosphonic acid, hypophosphorous acid H₃PO₂, aluminum sulfate hydrate, alum, acidic silica gel (pH=6, in particular =5) and acidic alumina. Also possible for use are, for example, aluminum compounds of the general formula Al(OR²)₃ and titanates of the general formula Ti(OR²)₄ as acidic inorganic catalysts, R² each being identical or different and being chosen independently from C₁-C₁₀-alkyl radicals, such as methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, isoheptyl, n-octyl, 2-ethylhexyl, n-nonyl or n-decyl, C₃-C₁₂-cycloalkyl, examples being cyclopropyl, cyclobutyl, cyclopentyl, cyclohexyl, cycloheptyl, cyclooctyl, cyclononyl, cyclodecyl, cycloundecyl and cyclododecyl; preference is given to cyclopentyl, cyclohexyl and cycloheptyl.

Preferably the groups R¹ in Al(OR¹)₃ and Ti(OR¹)₄ are each identical and chosen from isopropyl or 2-ethylhexyl.

Preferred acidic organometallic catalysts are chosen for example dialkyltin oxides R¹₂SnO, where R¹ is as defined above. A particularly preferred example of acidic organometallic catalysts is di-n-butyltin oxide, available commercially in the form of oxo-tin. Further examples of organometallic catalysts are selected from dialkyltin dicarboxylates, for example dibutyltin dilaurate.

Preferred acidic organic catalysts are acidic organic compounds containing, for example, phosphate groups, sulfonic acid groups, sulfate groups or phosphonic acid groups. Particular preference is given to sulfonic acids such as para-toluenesulfonic acid. Acidic ion exchangers can also be used as acidic organic catalysts, examples being polystyrene resins which contain sulfonic acid groups and have been crosslinked with about 2 mol % of divinylbenzene.

Combinations of two or more of the aforementioned catalysts can also be used. Another possibility is to use those organic or organometallic or else inorganic catalysts which are in the form of discrete molecules, in an immobilized form.

If the use of acidic inorganic, organometallic or organic catalysts is desired, the amount of catalyst used in accordance with the invention is from 0.1 to 10% by weight, preferably from 0.2 to 2% by weight.

Step (a) is preferably carried out under an inert gas atmosphere, for example under carbon dioxide, nitrogen or noble gas, among which argon in particular may be mentioned.

In one embodiment of the present invention, step (a) is performed at temperatures of from 80°C to 200°C. It is preferred to operate at temperatures of from 130°C to 180°C., in particular from 140°C to 170°C. or below. Particular preference is given to maximum temperatures up to 165°C, very preferably up to 160°C.

The pressure conditions in step (a) are not critical. It is possible to operate at a considerably reduced pressure, at from 10 to 500 mbar, for example. Step (a) of the invention may also be conducted at pressures above 500 mbar. For reasons of simplicity it is preferred to carry out step (a) at atmospheric pressure, although it can also be carried out at a slightly elevated pressure, up to 1200 mbar, for example. Working under a significantly increased pressure is a further option, for example at pressures up to 10 bar. Performing step (a) at atmospheric pressure is preferred.

In one embodiment of the present invention, the duration of step (a) is from 10 minutes to 48 hours, preferably from 30 minutes to 24 hours and more preferably from one to 20 hours.

An unsaturated polyester results from step (a). The term "unsaturated" refers to the carbon-carbon double bonds being present in the polyester results from step (a). It is observed that some of the C-C double bonds have been isomerized in the course of step (a), for example 5 to 20 % of the double bonds.

After step (a), the resulting unsaturated polyester may be isolated easily, for example by removing the catalyst by filtration and concentrating the filtrate, usually under reduced pressure. Further suitable workup methods include precipitation following the addition of water and subsequent washing and drying. In other embodiments, the resultant unsaturated polyester is used without further purification.

In one embodiment of the present invention, unsaturated polyester resulting from step (a) have an average molecular weight Mₙ (gel permeation chromatography GPC in DMAc) of from 500 to 10,000 g/mol, preferably from 600 to 5,000 g/mol, more preferably from 700 to 2,500 and even more preferably from 750 to 2,000 g/mol. They are usually readily soluble in polar solvents; that is, clear solutions without gel particles being detectable to the naked eye can be prepared with up to 50% by weight, in some cases even up to 80% by weight, of inventive polyesters. Examples of polar solvents are tetrahydrofuran (THF), ethanol, diethylene glycol, propylene glycol.

In one embodiment of the present invention, unsaturated polyesters from step (a) have a hydroxyl number the range of from 20 to 150 mg KOH/g in accordance with DIN 53240 (2016).

In step (b), the unsaturated polyester resulting from step (a) is reacted with an amine, H₂N-R¹, with R¹ being defined as above.

In one embodiment of the present invention, the amounts of unsaturated polyester resulting from step (a) and amine, H₂N-R¹ are calculated in a way that the molar ratio of carbon-carbon double bonds of unsaturated polyester resulting from step (a) and amine H₂N-R¹ are in the range of from 1.3:1 to 1:1.3, preferably 1.1:1 to 1:1.1. In another embodiment, the amounts of unsaturated polyester resulting from step (a) and amine, H₂N-R¹ are calculated in a way that the molar ratio of (Z)-configured carbon-carbon double bonds of unsaturated polyester resulting from step (a) and amine H₂N-R¹ are in the range of from 1.3:1 to 1:1.3, preferably 1.1:1 to 1:1.1.

Step (b) may be carried out in bulk or in a polar solvent capable of dissolving the unsaturated ester resulting from step (a). Preference is given to bulk synthesis.

In one embodiment of the present invention, step (b) is carried out at a temperature in the range of from 20 to 80°C, preferably 40 to 70°C.

The pressure conditions in step (b) are not critical. It is possible to operate at a considerably reduced pressure, at from 10 to 500 mbar, for example. Step (b) of the invention may also be conducted at pressures above 500 mbar. For reasons of simplicity it is preferred to carry out step (b) at atmospheric pressure, although it can also be carried out at a slightly elevated pressure, up to 1200 mbar, for example. Working under a significantly increased pressure is a further option, for example at pressures up to 10 bar. Performing step (b) at atmospheric pressure is preferred.

In one embodiment of the present invention, the duration of step (b) is from 10 minutes to 48 hours, preferably from one to 30 hours.

After performance of step (b), inventive polyester is obtained, for example as a waxy solid. In many embodiments, inventive polyester contains some unreacted amine H₂N-R¹. Said unreacted amine is, however, not critical for the use of inventive polyester in cleaning compositions.

In an exemplary step (a) of the inventive process the polycondensation of activated maleic acid with diols (HO-A²-OH) and triols (A³(OH)₃) leads to branched unsaturated polyesters (a minority of maleic acid units are converted to trans configuration):

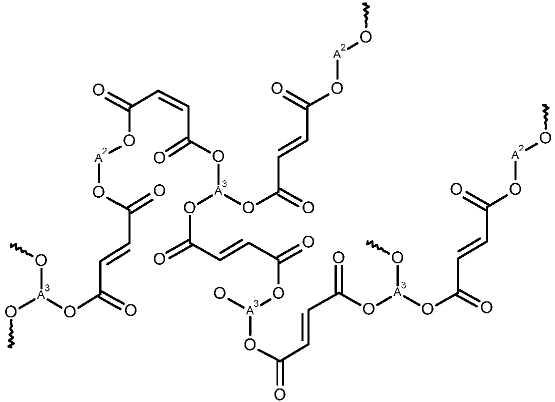

In an exemplary step (b) the branched unsaturated polyesters from step (a) are modified with primary monoamines R¹-NH₂ by way of an aza-Michael addition:

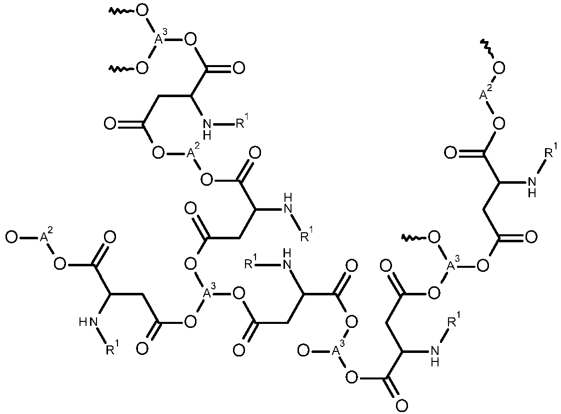

Another aspect of the present invention is related to the use of inventive polyesters in cleaning compositions, especially in laundry detergent compositions. Such compositions may also be referred to as inventive laundry detergent compositions or, briefly, as inventive compositions. Inventive laundry detergent compositions may be solid or liquid or gel-type at ambient temperature, liquid or gel type being preferred.

Inventive polyesters can be added to cosmetic formulations, as crude oil emulsion breaker, in pigment dispersions for inkjet inks, formulations for electro plating, in cementitious compositions. Preferably, inventive polyesters may be added to (used in) washing or cleaning compositions.

Another subject-matter of the present invention is, therefore, a cleaning composition, especially for fabric, comprising at least one inventive polyester, preferably a cleaning composition and/or fabric and home care product, comprising at least one inventive polyester, and in particular a cleaning composition for removal, dispersion and/or emulsification of soils and/or modification of treated surfaces and/or whiteness maintenance of treated surfaces, preferably at least two of those, more preferably at least three of those, and even more preferably four or more of those advantages.

Selected advantages of inventive cleaning compositions are
i) good clay removal,
ii) good soil removal of particulate stains,
iii) good dispersion and/or emulsification of soils,
iv) modification of treated surface to improve removal upon later re-soiling,
v) whiteness improvement,
vi) in embodiments wherein at least one enzyme selected from lipases, hydrolases, amylases, proteases, cellulases, hemicellulases, phospholipases, esterases, pectinases, lactases and peroxidases, and combinations of at least two of the foregoing types, is present, additionally for improvement of oily/fatty stains, food stain removal and/or removal of complex stains, and/or
vii) additionally for oily/fatty stain removal, food stain removal and/or removal of complex stains, when at least one enzyme according to vii) is present.

In one embodiment of the present invention, inventive compositions contain inventive polyester in a concentration of 0.05 to 20 weight%, preferably 0.1 to 15 weight%, more preferably 0.5 to 5 weight%.

In one embodiment of the present invention, inventive polyester is added to a composition comprising from about 1% to about 70% by weight of a surfactant combination. In such embodiments, inventive polyester may be present in a concentration of from about 0.1% to about 5% by weight of the composition, or at a concentration of from about 0.5% to about 2% by weight of the respective inventive composition.

Preferably, inventive compositions are laundry detergents, a cleaning composition and/or fabric and home care product, preferably a laundry detergent composition. Such inventive compositions provide improved removal, dispersion and/or emulsification of soils and / or modification of treated surfaces and/or whiteness maintenance of treated surfaces.

In one embodiment of the present invention, inventive compositions have a dynamic viscosity in the range of from 20 to 20,000 mPa·s, determined at 25°C according to Brookfield, for example spindle 3 at 20 rpm with a Brookfield viscosimeter LVT-II.

In one embodiment of the present invention, inventive compositions have a water content in the range of from 50 to 98% by weight, preferably up to 95%.

Inventive compositions are preferably phosphate-free, or - in other words - free from phosphate. "Free from phosphate" should be understood in the context of the present invention as meaning that the content of phosphate and polyphosphate is in sum in the range from 10 ppm to 1% by weight, determined by gravimetry and referring to the total non-volatile content, preferably 10 ppm to 0.2% by weight or less.

In one embodiment of the present invention, inventive compositions may have a non-volatile content in the range of from 10 to 30% by weight, preferably 15 to 30% by weight. The non-volatile content is determined by evaporation at 105°C under reduced pressure ("in vacuo") to constant residue but at least for 2 hours.

In one embodiment of the present invention, inventive compositions may comprise solvents other than water, for example ethanol, n-propanol, iso-propanol, n-butanol, iso-butanol, sec.-butanol, ethylene glycol, propylene glycol, 1,3-propane diol, butane diol, glycerol, diglycol, propyl diglycol, butyl diglycol, hexylene glycol, ethylene glycol methyl ether, ethylene glycol ethyl ether, ethylene glycol propyl ether, and phenoxyethanol, preferred are ethanol, isopropanol or propylene glycol.

In one embodiment of the present invention, inventive compositions comprise 0.5 to 12 % by weight of organic solvent, referring to the total respective composition. In embodiments in which inventive composition is provided as unit dose, e.g., in form of a pouch, the content of organic solvent may be in the range of from 8 to 25% by weight, referring to the total respective composition.

In one embodiment of the present invention, inventive compositions have a pH value in the range of from 7 to 11, preferably 7.5 to 9.5, more preferably 8 to 9.

Inventive compositions may contain one or more surfactants selected from non-ionic, anionic, cationic and zwitterionic surfactants, non-ionic and anionic surfactants being preferred.

In one embodiment of the present invention, inventive laundry detergent compositions additionally comprise at least one anionic surfactant selected from linear alkyl benzene sulfonates and alkoxylated sulfonated fatty alcohols.

In one embodiment inventive polyesters may be utilized in cleaning compositions comprising a surfactant system comprising C₁₀-C₁₅-alkyl benzene sulfonates (LAS) as the primary surfactant and one or more further surfactants selected from nonionic, cationic, anionic surfactants other than LAS, and mixtures thereof.

Preferred examples of alkoxylated sulfonated fatty alcohols are compounds according to general formula (II):

CₙH₂ₙ₊₁-O(CH₂CH₂O)ₐ-SO₃M (II)

hereinafter also being referred to as surfactant (1) or anionic surfactant (1),
with the variables being defined as follows:
   - n: is a number in the range of from 10 to 18, preferably 12 to 14, and even more preferably n = 12,
   - a: is a number in the range of from 1 to 5, preferably 2 to 4 and even more preferably 3.
   - M: is selected from alkali metals, preferably potassium and even more preferably sodium, or ethanolammonium.

In compounds according to formula (II), the variables n and a may be average numbers and therefore they are not necessarily whole numbers, while in individual molecules according to formula (II), both n and a denote whole numbers.

In one embodiment of the present invention, inventive compositions contain an additional anionic surfactant, hereinafter also referred to as linear alkyl benzene sulfonates.

In one embodiment of the present invention inventive compositions comprise alkali metal salts or amine salts of n-C₁₀-C₁₈-alkylbenzene sulfonic acids, especially sodium or ethanolammonium n-dodecylbenzenesulphonate as anionic surfactant, for example a mixture from the sodium salts of linear 4-dodecylbenzene-sulphonate and linear 5-dodecylbenzenesulphonate. The amount of sodium or ethanolammonium n-dodecylbenzenesulphonate may be in the range of from 10 to 40 % by weight referring to the total non-volatile content of said liquid detergent composition.

Ethanolammonium may be selected from to mono-ethanolammonium, N,N-diethanolammonium and N,N,N-triethanolammonium, preference is given to mono-ethanolammonium.

Further examples of anionic surfactants are alkali metal and ammonium salts of C₈-C₁₂-alkyl sulfates, of C₁₂-C₁₈-fatty alcohol ether sulfates, of sulfuric acid half-esters of ethoxylated C₄-C₁₂-alkylphenols (ethoxylation: 3 to 50 mol of ethylene oxide/mol), of C₁₂-C₁₈-alkylsulfonic acids, of C₁₂-C₁₈ sulfo fatty acid alkyl esters, for example of C₁₂-C₁₈ sulfo fatty acid methyl esters, of C₁₀-C₁₈-alkylarylsulfonic acids, preferably of n-C₁₀-C₁₈-alkylbenzene sulfonic acids, of C₁₀-C₁₈ alkyl alkoxy carboxylates and of soaps such as for example C₈-C₂₄-carboxylic acids. Preference is given to the alkali metal salts of the aforementioned compounds, particularly preferably the sodium salts.

In one embodiment of the present invention, inventive compositions contain at least one nonionic surfactant, for example polyglycosides, alkoxylated fatty amines or alkoxylated fatty alcohols, and more preferably at least one compound according to formula (III), (IV) or (V).

In one embodiment of the present invention, polyglycoside are selected from compounds according to formula (III)

(G)ᵤ-OR³ (III)

R³ is selected from C₈-C₁₈-alkyl, straight chain or branched, linear being preferred,
u is in the range of from 1.1 to 4,
G selected from monosaccharides with 4 to 6 carbon atoms, preferably glucose and xylose.

Even more preferred polyglycosides are selected from linear C₄-C₁₆-alkyl polyglucosides and branched C₈-C₁₄-alkyl polyglycosides such as compounds of general average formula (III.1) are likewise suitable. 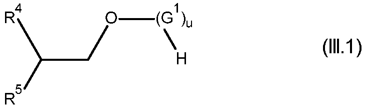 wherein:
- R⁴: is C₁-C₄-alkyl, in particular ethyl, n-propyl or isopropyl,
- R⁵: is -(CH₂)₂-R⁴,
- G¹: is selected from monosaccharides with 4 to 6 carbon atoms, especially from glucose and xylose,
- u: in the range of from 1.1 to 4, u being an average number.

In one embodiment of the present invention, alkoxylated fatty amines are selected from compounds according to general formula (IV)

CₘH₂ₘ₊₁-N[(AO)ᵣH]₂ (IV)

- m: is a number in the range of from 10 to 18,
- r: are different or identical and in the range of from 1 to 12,
- AO: are different or identical and selected from ethylene oxide or combinations of ethylene oxide and at least one of propylene oxide, and butylene oxide,

In one embodiment of the present invention, polyalkoxylated fatty alcohols, are selected from compounds according to general formula (V)

CₘH₂ₘ₊₁-O[(AO)ᵣH] (V)

with the variables being defined as above.
- M: is selected from alkali metals, preferably potassium and even more preferably sodium,
- AO: are different or identical and selected from ethylene oxide, propylene oxide, and butylene oxide, and from combinations of at least two of the foregoing, especially ethylene oxide, CH₂CH₂O,
- r: being different or identical and selected from numbers in the range of from 1 to 12, preferably 5 to 10.

In the above surfactants, the variables m and y may be average numbers and therefore they are not necessarily whole numbers, while in individual molecules according to formula (II), both m and y denote whole numbers.

In one embodiment of the present invention, inventive compositions contain at least one sequestering agent. Preferred are phosphate-free sequestering agents. Examples are citric acid and aminopolycarboxylic acids and their respective alkali metal salts, especially the sodium salts. Preferred aminocarboxylic acids are methylglycine diacetic acid (MGDA) and glutamic acid diacetic acid (GLDA).

MGDA and its respective salts can be selected from the racemic mixtures, the D-isomers and the L-isomers, and from mixtures of the D- and L-isomers other than the racemic mixtures. Preferably, MGDA and its respective salts are selected from the racemic mixture and from mixtures containing in the range of from 55 to 85 mole-% of the L-isomer, the balance being D-isomer. Particularly preferred are mixtures containing in the range of from 60 to 80 mole-% of the L-isomer, the balance being D-isomer.

The distribution of L- and D-enantiomer can be determined by measuring the polarization (polarimetry) or preferably by chromatography, for example by HPLC with a chiral column, for example with one or more cyclodextrins as immobilized phase. Preferred is determination of the ee by HPLC with an immobilized optically active ammonium salt such as D-penicillamine.

GLDA and its respective salts can be selected from the racemic mixtures, the D-isomers and the L-isomers, and from mixtures of the D- and L-isomers other than the racemic mixtures. Preferably, GLDA and its respective salts are selected from mixtures containing in the range of from 75 to 99 mole-% of the L-isomer, the balance being D-isomer. Particularly preferred are mixtures containing in the range of from 80 to 97.5 mole-% of the L-isomer, the balance being D-isomer.

In one embodiment of the present invention, inventive compositions are free from bleaching agents. Bleaching agents in the context of the present invention are organic peroxides, inorganic peroxides and chlorine bleaches. Examples of organic and inorganic peroxides are sodium perborate, anhydrous or for example as monohydrate or as tetrahydrate or so-called dihydrate, sodium percarbonate, anhydrous or, for example, as monohydrate, hydrogen peroxide, persulfates, organic peracids such as peroxylauric acid, peroxystearic acid, peroxy-α-naphthoic acid, 1,12-diperoxydodecanedioic acid, perbenzoic acid, peroxylauric acid, 1,9-diperoxyazelaic acid, diperoxyisophthalic acid, in each case as free acid or as alkali metal salt, in particular as sodium salt, also sulfonylperoxy acids and cationic peroxy acids. chlorine-containing bleaches are, for example, 1,3-dichloro-5,5-dimethylhydantoin, N-N-chlorosulfamide, chloramine T, chloramine B, sodium hypochlorite, calcium hypochlorite, magnesium hypochlorite, potassium hypochlorite, potassium dichloroisocyanurate and sodium dichloroisocyanurate.

"Free from" in the context of bleaching agents means less than 0.5% by weight, referring to the total non-volatile content.

In one embodiment of the present invention, inventive compositions contain at least one alkali metal or ethanolammonium salt of a fatty acid, preferably at least one potassium or ethanolammonium salt of a fatty acid. Examples are the sodium salts and especially the potassium salts of lauric acid, myristic acid, palmitic acid, stearic acid, (hydrogenated) erucic acid and behenic acid, and especially soap mixtures derived from natural fatty acids such as coconut oil fatty acid, palm kernel oil fatty acid, olive oil fatty acid or tallow fatty acid. Preferred examples are potassium coconut soap, potassium stearate, potassium oleate, potassium coconut soap with an average formula of n-C₁₂H₂₅COOK being even more preferred. The amount of potassium salt of fatty acid may be in the range of from 10 to 25 % by weight referring to the total non-volatile content of said liquid detergent composition.

Inventive compositions are liquid laundry detergent compositions. They may comprise ingredients other than the aforementioned. Examples are surfactants other than the aforementioned, especially zwitterionic surfactants, furthermore fragrances, dyestuffs, biocides, preservatives, enzymes, hydrotropes, builders, viscosity modifiers, polymers, buffers, defoamers, and anti-corrosion additives.

Examples of fragrances are benzyl salicylate, 2-(4-tert.-butylphenyl) 2-methylpropional, commercially available as Lilial^{®}, and hexyl cinnamaldehyde.

Examples of dyestuffs are Acid Blue 9, Acid Yellow 3, Acid Yellow 23, Acid Yellow 73, Pigment Yellow 101, Acid Green 1, Solvent Green 7, and Acid Green 25.

Inventive liquid detergent compositions may contain one or more preservatives or biocides. Biocides and preservatives prevent alterations of inventive liquid detergent compositions due to attacks from microorganisms. Examples of biocides and preservatives are BTA (1,2,3-benzotriazole), benzalkonium chlorides, 1,2-benzisothiazolin-3-one ("BIT"), 2-methyl-2H-isothiazol-3-one ("MIT") and 5-chloro-2-methyl-2H-isothiazol-3-one ("CIT"),iodopropynyl butylcarbamate ("IPBC"), dichlorodimethylhydantoine ("DCDMH"), bromochlorodimethylhydantoine ("BCDMH"), and dibromodimethylhydantoine ("DBDMH"),
benzoic acid, sorbic acid and their salts, e.g., sodium benzoate, ammonium benzoate, calcium benzoate, magnesium benzoate, MEA-benzoate, potassium benzoate, calcium sorbate, sodium sorbate, iodopropynyl butylcarbamate ("IPBC"), dichlorodimethylhydantoine ("DCDMH"), bromochlorodimethylhydantoine ("BCDMH"), and dibromodimethylhydantoine ("DBDMH").

Particularly of interest are the following antimicrobial agents and/or preservatives: 4,4'-dichloro 2-hydroxydiphenyl ether, further names: 5-chloro-2-(4-chlorophenoxy) phenol, Diclosan, DCPP that is commercially available as a solution of 30 wt% of 4,4'-dichloro 2-hydroxydiphenyl ether in 1,2 propyleneglycol,
2-Phenoxyethanol, further names: phenoxyethanol, methylphenylglycol, phenoxetol, ethylene glycol phenyl ether, ethylene glycol monophenyl ether);
2-bromo-2-nitropropane-1,3-diol, further names: 2-bromo-2-nitro-1,3-propanediol, Glutaraldehyde (CAS-No. 111-30-8, further names: 1-5-pentandial, pentane-1,5-dial, glutaral, glutardialdehyde, Glyoxal (further names: ethandial, oxylaldehyde, 1,2-ethandial);
Mixtures of 5-chloro-2-methyl-2H- isothiazol-3-one (CMIT) and 2-methyl-2H-isothiazol-3-one (MIT, EINECS 220-239-6) (mixture of CMIT/MIT); potassium (E,E)-hexa-2,4-dienoate (potassium sorbate); lactic acid and its salts; especially sodium lactate, especially L-(+)-lactic acid,
Salicylic acid and its salts, e.g., calcium salicylate, magnesium salicylate, MEA salicylate, sodium salicylate, potassium salicylate, and TEA salicylate.

Benzalkonium chloride, benzalkonium bromide, benzalkonium saccharinate, didecyldimethylammonium chloride (DDAC); N-(3-aminopropyl)-N-dodecylpropane-1,3-diamine (Diamine); peracetic acid, and hydrogen peroxide.

Biocide or preservative may be added to inventive composition in a concentration of 0.001 to 10% relative to the total weight of the composition.

Preferably, inventive compositions contain 2-phenoxyethanol in a concentration of 0.1 to 2% or 4,4'-dichloro 2-hydroxydiphenyl ether (DCPP) in a concentration of 0.005 to 0.6%.

One embodiment of the present invention thus concerns a method of preserving an aqueous composition according to the invention against microbial contamination or growth, which method comprises addition of 2-phenoxyethanol.

Examples of viscosity modifiers are agar-agar, carragene, tragacanth, gum arabic, alginates, pectins, hydroxyethyl cellulose, hydroxypropyl cellulose, starch, gelatin, locust bean gum, crosslinked poly(meth)acrylates, for example polyacrylic acid cross-linked with methylene bis-(meth)acrylamide, furthermore silicic acid, clay such as - but not limited to - montmorrilionite, zeolite, dextrin, and casein.

Hydrotropes in the context with the present invention are compounds that facilitate the dissolution of compounds that exhibit limited solubility in water. Examples of hydrotropes are organic solvents such as ethanol, isopropanol, ethylene glycol, 1,2-propylene glycol, and glycerol, and further organic solvents that are water-miscible under normal conditions without limitation. Further examples of suitable hydrotropes are the sodium salts of toluene sulfonic acid, of xylene sulfonic acid, and of cumene sulfonic acid.

Examples of of useful enzymes are one or more hydrolases selected from lipases, amylases, proteases, cellulases, hemicellulases, phospholipases, esterases, pectinases, lactases and peroxidases, and combinations of at least two of the foregoing types of the foregoing. Particularly useful enzymes are selected from are proteases, amylases, and cellulases.

The preferred amount of enzyme in inventive compositions is in the range from 0.001% to 5 % of active enzyme by weight in the detergent composition according to the invention. Together with enzymes also enzyme stabilizing systems may be used such as for example calcium ions, boric acid, boronic acid, propylene glycol and short chain carboxylic acids. In the context of the present invention, short chain carboxylic acids are selected from monocarboxylic acids with 1 to 3 carbon atoms per molecule and from dicarboxylic acids with 2 to 6 carbon atoms per molecule. Preferred examples are formic acid, acetic acid, propionic acid, oxalic acid, succinic acid, glutamic acid (HOOC(CH₂)₃COOH), adipic acid and mixtures from at least two of the foregoing, as well as the respective sodium and potassium salts.

Examples of polymers are especially polyacrylic acid and its respective alkali metal salts, especially its sodium salt. A suitable polymer is in particular polyacrylic acid, preferably with an average molecular weight M_{w} in the range from 2,000 to 40,000 g/mol. preferably 2,000 to 10,000 g/mol, in particular 3,000 to 8,000 g/mol, each partially or fully neutralized with alkali, especially with sodium. Suitable as well are copolymeric polycarboxylates, in particular those of acrylic acid with methacrylic acid and of acrylic acid or methacrylic acid with maleic acid and/or fumaric acid. Polyacrylic acid and its respective alkali metal salts may serve as soil anti-redeposition agents.

Another type of useful copolymers are polyvinylpyrrolidones, copolymers N-vinylpyrrolidone ("NVP") with N-imidazole, copolymers of acrylic acid with NVP or N-imidazole or with both NVP and N-imidazole. Such (co)polymers may have an average molecular weight M_{w} in the range of from 5,000 to 100,000 g/mol, determined by gel permeation chromatography. Polyvinylpyrrolidones and copolymers of NVP with N-imidazole and copolymers of acrylic acid with NVP or with N-imidazole may serve as dye transfer inhibitors.

Further examples of polymers are polyethylene terephthalates, polyoxyethylene terphthalates, and polyethylene terephthalates that are end-capped with one or two hydrophilic groups per molecule, hydrophilic groups being selected from CH₂CH₂CH₂-SO₃Na, CH₂CH(CH₂-SO₃Na)₂, and CH₂CH(CH₂SO₂Na)CH₂-SO₃Na.

Further examples of polymers include multifunctional polyethylenimines and/or multifunctional diamines. Such multifunctional polyethylenimines are selected from ethoxylated polyethylenimines with a molecular weight M_{w} in the range from 3,000 to 250,000, preferably 5,000 to 200,000, more preferably 8,000 to 100,000, and even more preferably 10,000 to 20,000 g/mol. Suitable multifunctional polyethylenmines have 80 wt% to 99 wt%, preferably 85 wt% to 99 wt%, more preferably 90 wt% to 98 wt%, most preferably 93 wt% to 97 wt% or 94 wt% to 96 wt% ethylene oxide side chains, based on the total weight of the materials. Ethoxylated polyethylenimines are typically based on a polyethylenimine core with polyethylene oxide side chains. Examples of suitable polyethylenimines are polyethylenimines with a molecular weight M_{w} in the range of from 500 to 5000 g/mol, preferably 500 to 2000 g/mol, even more preferred is a M_{w} of 600 to 800 g/mol. The ethoxylated polyethylenimine then bears on average 5 to 50, preferably 10 to 35 and even more preferably 20 to 35 ethylene oxide (EO) units per NH-functional group.

Suitable multifunctional diamines are typically ethoxylated C₂-C₁₂-alkylene diamines, preferably hexamethylene diamine, which are further quaternized and optionally sulfated. Typical multifunctional diamines have a molecular weight M_{w} in the range from 2,000 to 10,000, preferably 3000 to 8000, and more preferably 4000 to 6000 g/mol. In a preferred embodiment of the invention, ethoxylated hexamethylene diamine, furthermore quaternized and sulfated, may be employed, which contains on average 10 to 50, preferably 15 to 40 and even more preferably 20 to 30 ethylene oxide (EO) groups per NH-functional group, and which preferably bears two cationic ammonium groups and two anionic sulfate groups.

In a preferred embodiment of the present invention, inventive cleaning compositions contain at least one multifunctional polyethylenimine and/or at least one multifunctional diamine. Multifunctional polyethylenimines and multifunctional diamines or mixtures thereof may be added to inventive laundry detergents and cleaning compositions in amounts of generally from 0.05 to 15 wt%, preferably from 0.1 to 10 wt% and more preferably from 0.25 to 5 wt% and even as low as up to 2 wt.%, based on the particular overall composition, including other components and water and/or solvents. Such compositions then show an improved cleaning performance, such as improved stain removal ability, especially the primary detergency of particulate stains on polyester fabrics.

Thus, one aspect of the present invention is a laundry detergent composition, in particular a liquid laundry detergent, comprising (i) at least one inventive polyester and (ii) at least one compound selected from multifunctional polyethylenimines and multifunctional diamines and mixtures thereof.

In one embodiment of the present invention, the ratio of the at least one inventive polymer and (ii) the at least one compound selected from multifunctional polyethylenimines and multifunctional diamines and mixtures thereof, is from 10:1 to 1:10, preferably from 5:1 to 1:5 and more preferably from 3:1 to 1:3.

Examples of buffers are monoethanolamine/monoethanolammonium and N,N,N-triethanolamine/N,N,N triethanolammonium.

Examples of defoamers are silicones.

Inventive compositions are not only advantageous when used as or in cleaning soiled laundry with respect to inorganic soil such as clay, or organic fatty soil such as oil or for removing nonbleachable stains such as, but not limited to stains from red wine, tea, coffee, vegetables, and various fruit juices like berry juices from laundry. They still do not leave residues on the clothes.

In one embodiment of the present invention, 50 to at least 85% by weight of the organic compounds contained in inventive compositions are biodegradable. The biodegradability is in accordance with the OECD Guidelines dated 2016, and it is preferably determined as described further down below.

In order to be suitable as liquid laundry detergent inventive compositions may be in bulk form or as unit doses, for example in the form of sachets or pouches. Suitable materials for pouches are water-soluble polymers such as polyvinyl alcohol.

Another aspect of the present invention is the use of an inventive composition for cleaning laundry. Particularly, an aspect of the present invention is the use of inventive compositions for cleaning laundry, especially laundry made from or containing polyester. Another aspect of the present invention is a process to clean laundry, hereinafter also referred to as inventive process. The inventive process is directed towards cleaning laundry by applying at least one inventive composition, preferably in a washing machine. The inventive process can be performed in an automatic laundry cleaner or manually. Said inventive detergent composition is preferably diluted with water before applying it to the soiled laundry.

In one embodiment of the present invention the inventive process is characterized in that the respective inventive composition is applied to soiled laundry at a temperature in the range of from 20 to 65°C.

By the inventive laundering process - and according to the inventive use as well - such clay can be removed very efficiently from soiled laundry.

A further aspect of the present invention is a process for making inventive liquid detergent compositions, hereinafter also referred to as inventive method. The inventive method comprises mixing inventive polyester with other ingredients such as, but not limited to sequestering agent, surfactants, and, optionally, further ingredients as outlined above, with water in one or more steps.

The present invention is further illustrated by working examples.

### I. General remarks

Hydroxyl numbers (HN) of linear and branched unsaturated polyesters were determined according to DIN 53240 (2016) standard using the perchloric acid catalyzed method.

### Gel Permeation Chromatography (GPC)

GPC measurements of unsaturated polyesters and inventive polyesters were performed in THF or DMAc (with 0.5% LiBr) at RT by PSS Agilent 1200 Series. The nominal solvent flow rate was 1 mL/min. Three SEC columns with a pore size of 100, 1000, and 10000 Å for THF and 30 and 2×1000 Å for DMAc from PSS Polymer Standards were used for fractionation. The refractive index detector G136A and UV/Vis detector G1314B from Agilent Technologies were used. The calibration was carried out with polystyrene as standard for samples in THF and poly(methyl methacrylate) for samples in DMAc. The results were evaluated using WinGPC UniChrom V 8.20 software from Polymer Standards Service GmbH.

General: the biodegradability tests are carried out in accordance with the OECD Guidelines. According to the OECD guidelines a test is valid if:
1. The reference reaches 60% within 14 days.
2. The difference of the extremes of the test replicates by the end of the test is less than 20%.
3. Oxygen uptake of inoculum blank is 20-30 mg O₂/l and must not be greater than 60mg O₂/l.
4. The pH value measured at the end of the test must be between 6 and 8.5.

Biodegradation in sewage was tested in triplicate using the OECD 301F manometric respirometry method. OECD 301F is an aerobic test that measures biodegradation of a sewage sample by measuring the consumption of oxygen. To a measured volume of sewage, 100 mg/L test substance, which is the nominal sole source of carbon, was added along with the inoculum (aerated sludge taken from the municipal sewage treatment plant, Mannheim, Germany). This sludge was stirred in a closed flask at a constant temperature (25°C) for 28 days. The consumption of oxygen is determined by measuring the change in pressure in the closed flask using an Oxi TopC. Carbon dioxide evolved was absorbed in a solution of sodium hydroxide. Nitrification inhibitors were added to the flask to prevent consumption of oxygen due to nitrification. The amount of oxygen taken up by the microbial population during biodegradation of the test substance (corrected for uptake by a blank inoculum run in parallel) is expressed as a percentage of ThOD (theoretical oxygen demand, which is measured by the elemental analysis of the compound). A positive control glucose/glutamic acid is run along with the test samples for each cabinet as reference.

### Calculations:

Theoretical oxygen demand: Amount of O₂ required to oxidize a compound to its final oxidation products, e.g. H₂O, CO₂. This is calculated using the elemental analysis data.

Calculation of % Biodegradation: Experimental O₂ uptake. 100 and divided by the theoretical O₂ demand

### Abbreviations: MeHQ: 4-Methoxy hydroquinone

### II. Syntheses

### II.1 Synthesis of inventive polyester PE.1

### Step (a.1) DEM/1,6-HD/TMP; 1.1:0.5:0.5

A 1-liter two-neck round-bottom flask equipped with a mechanical stirrer with PTFE blade was charged with diethyl maleate (385 g, 2.24 mol), 1,6-hexanediol (120.1 g, 1.02 mol), 1,1,1-trimethylolpropane (136.37 g, 1.02 mol) and dibutyltin dilaurate (1.41 g, 2.23 mmol). The flask was attached to a Liebig condenser with a Claisen head, and a slow flow of dry N₂ through the head was applied to keep the reaction under an inert atmosphere. The reaction mixture so obtained was heated to 160 °C for 10 hours with an oil bath. During the first 2 hours, the reaction mixture was kept under N₂ flow, then the pressure in the flask was gradually reduced to 50 mbar using a vacuum pump. After 10 hours, an unsaturated polyester was obtained. MeHQ (660 mg) was dissolved in the unsaturated polyester that was used in step (b.1) without further purification.

### Step (b.1):

A 250 mL round-bottom flask equipped with a magnetic stirrer bar was charged with 200.84 g unsaturated polyester from step (a.1) corresponding to 0.9 mol of C-C- double bonds. The flask heated to 50 °C under a flow of dry N₂, and H₂N-(EO)₁₉(PO)₃-H (900 g, 0.9 mol) was slowly added. Once the addition was finished, the reaction mixture was stirred at 60 °C for 24 hours. The reaction mixture so obtained was allowed to cool down to ambient temperature. Inventive polyester PE.1 was obtained.

### II.2 Synthesis of inventive polyester PE.2

### Step (a.2):

A 1-liter two-neck round-bottom flask equipped with a mechanical stirrer with PTFE blade was charged with diethyl maleate (758 g, 4.4 mol), 1,6-hexanediol (236 g, 2 mol), glycerol (184 g, 2 mol) and dibutyltin dilaurate (2.78 g, 4.4 mmol). The flask was attached to a Liebig condenser with a Claisen head, and a slow flow of dry N₂ through the head was applied to keep the reaction under an inert atmosphere. The reaction mixture so obtained was heated to 160 °C for 10 hours. During the first 2 hours, the reaction mixture was kept under N₂ flow. Then, the pressure in the flask was gradually reduced to 50 mbar using a vacuum pump. After 10 hours, an unsaturated polyester was obtained. 1181 mg of MeHQ was dissolved in the unsaturated polyester that was used in step (b.2) without further purification.

### Step (b.2):

A 250 mL round-bottom flask equipped with a magnetic stirrer bar was charged with 100 g (0.49 mol of double bonds) unsaturated polyester from step (a.2). The flask was heated to 50 °C under a flow of dry N₂ and H₂N-(EO)₁₉(PO)₃-H (490 g, 0.49 mol) was slowly added. Once the addition was finished, the reaction mixture was stirred at 60 °C for 24 hours. The reaction mixture so obtained was allowed to cool down to ambient temperature. Inventive polyester PE.2 was obtained.

### II.3 Synthesis of inventive polyester PE.3

### Step (a.3):

A 1-liter two-neck round-bottom flask equipped with a mechanical stirrer with PTFE blade was charged with diethyl maleate (758 g, 4.4 mol), 1,6-hexanediol (378 g, 3.2 mol), 1,1,1-trimethylolpropane (107 g, 0.8 mol) and dibutyltin dilaurate (2.78 g, 4.4 mmol). The flask was attached to a Liebig condenser with a Claisen head, and a slow flow of dry N₂ through the head was applied to keep the reaction under an inert atmosphere. The reaction mixture so obtained was heated to 160 °C for 10 hours. During the first 2 hours, the reaction mixture was kept under N₂ flow. Then, the pressure in the flask was gradually reduced to 50 mbar using a vacuum pump. After 10 hours, an unsaturated polyester was obtained. 1243 mg of MeHQ was dissolved in the unsaturated polyester that was used in step (b.3) without further purification.

### Step (b.3):

A 250 mL round-bottom flask equipped with a magnetic stirrer bar was charged with 100 g (0.49 mol of double bonds) unsaturated polyester from step (a.3). The flask was heated to 50 °C under a flow of dry N₂ and H₂N-(EO)₁₉(PO)₃-H (490 g, 0.49 mol) was slowly added. Once the addition was finished, the reaction mixture was stirred at 60 °C for 24 hours. The reaction mixture so obtained was allowed to cool down to ambient temperature. Inventive polyester PE.3 was obtained.

### II.4 Synthesis of inventive polyester PE.4

### Step (a.4):

A 1-liter two-neck round-bottom flask equipped with a mechanical stirrer with PTFE blade was charged with diethyl maleate (379 g, 2.2 mol), 1,6-hexanediol (189 g, 1.6 mol), glycerol (37 g, 0.4 mol) and dibutyltin dilaurate (1.39 g, 2.2 mmol). The flask was attached to a Liebig condenser with a Claisen head, and a slow flow of dry N₂ through the head was applied to keep the reaction under an inert atmosphere. The reaction mixture so obtained was heated to 160 °C for 10 hours. During the first 2 hours, the reaction mixture was kept under N₂ flow. Then, the pressure in the flask was gradually reduced to 50 mbar using a vacuum pump. After 10 hours, an unsaturated polyester was obtained. 436 mg of MeHQ was dissolved in the unsaturated polyester that was used in step (b.4) without further purification.

### Step (b.4):

A 250 mL round-bottom flask equipped with a magnetic stirrer bar was charged with 100 g (0.49 mol of double bonds) unsaturated polyester from step (a.4). The flask was heated to 50 °C under a flow of dry N₂ and H₂N-(EO)₁₉(PO)₃-H (490 g, 0.49 mol) was slowly added. Once the addition was finished, the reaction mixture was stirred at 60 °C for 24 hours. The reaction mixture so obtained was allowed to cool down to ambient temperature. Inventive polyester PE.4 was obtained.

Analytics are summarized in Table 1. The synthesized polyaspartic acid esters were used for investigations without further purification. The molar masses, viscosities, glass transition temperatures of chosen polyaspartic acid esters were determined.

**Table 1: analytical data of inventive polyesters**

| | Mₙ [g/mol] | Mw/Mn | Amine value [mg KOH/g] | T_{g} [°C] | Appearance in water (50 wt.-%) |
|---|---|---|---|---|---|
| PE.1 | 4570 | 3.67 | 46 | -25 | clear, viscous solution |
| PE.2 | 3810 | 3.12 | 44 | -23 | clear, viscous solution |
| PE.3 | 4630 | 2.40 | 47 | -35 | clear, viscous solution* |
| PE.4 | 4860 | 2.11 | 46 | -24 | clear, viscous solution |

A Netzsch DSC 200 F3 (Erich Netzsch GmbH & Co. Holding KG, Selb, Germany) was used to determine the glass transition temperatures of inventive polyesters. The respective sample was heated from -150°C to 150°C at a rate of 10°C/min under a nitrogen atmosphere. Two coolingheating runs were performed for each sample and the data from the second heating curve was used. The data was analyzed using the Netzsch Proteus Thermal Analysis (Version 4.8.1) software.

### III. Manufacture and testing of liquid laundry detergent compositions

### III.1 General

A liquid base composition MC1 was made according to Table 2.

**Table 2: Composition of model formulation MC1**

| Component (as active, %) | MC1 |
|---|---|
| Linear alkyl benzene sulfonic acid, sodium salt | 5.5 |
| Alcohol ethoxylated (C₁₃-C₁₅ alcohol with 7 moles of EO) | 5.5 |
| n-C₁₂H₂₅-O(EO)₃-SO₃Na | 5.5 |
| Soap | 2.2 |
| Sodium Citrate | 2.0 |
| 1,2 propylene glycol | 6.0 |
| Ethanol | 2.0 |
| Water | To 100 |

### III.2 Primary Detergency in Linitest

The samples were tested in liquid model formulations MC1 with the composition given above in Table 2, respectively.

Inventive polyesters were added to model composition MC1 (additive dosage of 3% on weight of liquid model detergent (owod)) together with commercially obtained stained fabrics (from Center of Test Materials CFT Vlaardingen. P-H108: Clay, Ground soil, P-H115: Standard Clay; P-H144: Red Pottery Clay; P-H145: tennis Court Clay) and 5g of commercially available soil ballast sheet wfk SBL 2004 (from wfk Testgewebe GmbH Brueggen). Washing conditions were 3 g/L detergent, liquor 250 mL, 30 min, 40°C, 4-fold determination. After wash the fabrics were rinsed and dried. The fabrics were instrumentally assessed before and after wash using the MACH5 multi area color measurement instrument from ColourConsult which gives Lab readings. The results are summarized in Table 3. From these Lab readings, ΔE values were calculated between unwashed and washed stain. The higher the ΔE value, the better is the performance. To better judge on the pure cleaning effect of the respective polymer sample itself, the obtained values were further expressed in ΔΔE values vs reference without polymer (baseline correction for plain wash effect of detergent only). Again, the higher the values of ΔΔE the better is the performance, respectively.

**Table 3: Results of small-scale primary detergency (Linitest) in model formulation MC1 on commercially available stains as indicated below:**

| polyester | DDE sum over all stains | DDE stain #1 Clay Ground Soil PCH018 | DDE stain #2 Stanley Clay PCH115 | DDE stain #3 Red Pottery Clay PCH144 | DDE stain #4 Tennis Court Clay PH145 |
|---|---|---|---|---|---|
| PE.1 | 4.6 | 0.7 | 2.1 | 0.9 | 0.9 |
| PE.2 | 6.5 | 1.2 | 2.0 | 1.4 | 1.9 |
| PE.3 | 4.8 | 1.0 | 0.8 | 1.0 | 1.9 |
| PE.4 | 6.8 | 1.7 | 1.0 | 0.9 | 3.3 |

## Claims

1. A polyester comprising at least one diacid-based building block, at least one diol-based building block and at least one polyol-based building block, wherein the diacid-based building block comprises a group of formula (I) 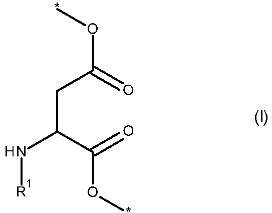
wherein R¹ is a group according to the general formula CH₂-CH₂-O(AO)ₓ-X¹, with x being a number from zero to 75, X¹ being hydrogen or methyl and AO being alkylene oxide selected from ethylene oxide and combinations of ethylene oxide with at least one of propylene oxide and butylene oxide,
wherein polyol building blocks are derived from compounds bearing y hydroxyl groups per molecule, and y being a least three,
and wherein the asterisks indicate bonds to diol or polyol building blocks through the ester oxygen atoms,
wherein the molar ratio of diacid-based building blocks to the sum of diol building blocks and polyol building blocks, the latter being multiplied with 2/y, is in the range from 2:1 to 1:2.

2. The polyester of claim 1 wherein x is zero or in the range of from 1 to 30 with the majority of AO in R¹ being ethylene oxide.

3. The polyester of claim 1 or 2 having an average molecular weight Mₙ in the range of from 3,000 to 5,000 g/mol, determined by gel permeation chromatography.

4. The polyester of any of claims 1 to 3, additionally comprising at least one building block selected from C₄-C₆ dicarboxylic acids that do not bear an NH-R¹ group.

5. The polyester of any of claims 1 to 4 wherein the diol building block is based on ethylene glycol, diethylene glycol, triethylene glycol, 1,4-butanediol, 1,6-hexandiol, neopentylglycol, 2,5-dimethyl-2,5-hexandiol or 2-ethyl-1,3-hexandiol or on mixtures of at least two of the foregoing.

6. The polyester of any of claims 1 to 5 wherein the polyol component is selected from triols and tetrols.

7. The polyester of any of claims 1 to 6 wherein the polyol building block is based on glycerol, butane-1,2,4-triol, n-pentane-1,2,5-triol, n-pentane-1,3,5-triol, n-hexane-1,2,6-triol, n-hexane-1,2,5-triol, n-hexane-1,3,6-triol, 1,1,1-trimethylolbutane, 1,1,1-trimethylolpropane, 1,1,1-trimethylolethane, or trimethylolmethane or on mixtures of at least two of the foregoing.

8. The polyester of any of claims 1 to 7 wherein the molar ratio of diacid-based building blocks to the sum of diol building blocks and polyol building blocks is in the range from 1.5:1 to 1:1.5.

9. A process for making a polyester according to any of the claims 1 to 8 comprising the steps
(a) reacting an activated α,β-ethylenically unsaturated dicarboxylic acid with a mixture of at least one diol and at least one polyol, wherein the activated unsaturated dicarboxylic acid is selected from activated maleic acid, activated itaconic acid and activated fumaric acid, **characterized in that** the molar ratio of carboxyl groups of activated α,β-ethylenically unsaturated dicarboxylic acid to the sum of hydroxyl groups of diol and polyol is in the range from 2:1 to 1:2;
(b) reacting the product resulting from step (a) with R¹-NH₂.

10. The process of claim 9 wherein the molar ratio of hydroxyl groups of diol(s) and polyol(s) is in the range from 1:2 to 2:1.

11. The process of claim 9 or 10 wherein the activated α,β-ethylenically unsaturated dicarboxylic acid is selected from C₁-C₄-alkyl diesters, dichlorides and the anhydride of maleic ester and itaconic acid and C₁-C₄-alkyl diesters and the dichloride of fumaric acid.

12. Laundry detergent comprising at least one polyester according to any of the claims 1 to 8.

13. Laundry detergent according to claim 12, additionally comprising at least one anionic surfactant selected from linear alkyl benzene sulfonates and alkoxylated sulfonated fatty alcohols and/or additionally comprising at least one enzyme.

14. Laundry detergent composition according to claim 12 or 13 wherein said composition is liquid or gel type at ambient temperature.

15. Method of preserving laundry detergent according to any of claims 12 to 14 against microbial contamination or growth, which method comprises addition of 2-phenoxyethanol.

## Patentansprüche

1. Polyester, umfassend mindestens einen auf Disäure basierenden Baustein, mindestens einen auf Diol basierenden Baustein und mindestens einen auf Polyol basierenden Baustein, wobei der auf Disäure basierende Baustein eine Gruppe der Formel (I) 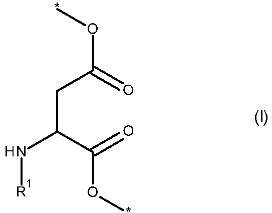
umfasst, wobei R¹ für eine Gruppe gemäß der allgemeinen Formel CH₂-CH₂-O(AO)ₓ-X¹ steht, wobei x für eine Zahl von null bis 75 steht, wobei X¹ für Wasserstoff oder Methyl steht und AO für Alkylenoxid, das aus Ethylenoxid und Kombinationen von Ethylenoxid mit Propylenoxid und/oder Butylenoxid ausgewählt ist, steht,
wobei Polyol-Bausteine von Verbindungen mit y Hydroxylgruppen pro Molekül abgeleitet sind, wobei y für mindestens drei steht,
und wobei die Sternchen Bindungen an Diol- oder Polyol-Bausteine über die Ester-Sauerstoffatome anzeigen,
wobei das Molverhältnis von auf Disäure basierenden Bausteinen zur Summe von Diol-Bausteinen und Polyol-Bausteinen, wobei letztere mit 2/y multipliziert werden, im Bereich von 2:1 bis 1:2 liegt.

2. Polyester nach Anspruch 1, wobei x für null steht oder im Bereich von 1 bis 30 liegt, wobei es sich bei der Mehrheit von AO in R¹ um Ethylenoxid handelt.

3. Polyester nach Anspruch 1 oder 2 mit einem mittleren Molekulargewicht Mₙ im Bereich von 3000 bis 5000 g/mol, bestimmt durch Gelpermeationschromatographie.

4. Polyester nach einem der Ansprüche 1 bis 3, der zusätzlich mindestens einen Baustein umfasst, der aus C₄-C₆-Dicarbonsäuren, die keine NH-R¹-Gruppe tragen, ausgewählt ist.

5. Polyester nach einem der Ansprüche 1 bis 4, wobei der Diol-Baustein auf Ethylenglykol, Diethylenglykol, Triethylenglykol, 1,4-Butandiol, 1,6-Hexandiol, Neopentylglykol, 2,5-Dimethyl-2,5-hexandiol oder 2-Ethyl-1,3-hexandiol oder auf Mischungen von mindestens zwei der vorstehenden Verbindungen basiert.

6. Polyester nach einem der Ansprüche 1 bis 5, wobei die Polyol-Komponente aus Triolen und Tetrolen ausgewählt ist.

7. Polyester nach einem der Ansprüche 1 bis 6, wobei der Polyol-Baustein auf Glycerin, Butan-1,2,4-triol, n-Pentan-1,2,5-triol, n-Pentan-1,3,5-triol, n-Hexan-1,2,6-triol, n-Hexan-1,2,5-triol, n-Hexan-1,3,6-triol, 1,1,1-Trimethylolbutan, 1,1,1-Trimethylolpropan, 1,1,1-Trimethylolethan oder Trimethylolmethan oder auf Mischungen aus mindestens zwei der vorstehenden Verbindungen basiert.

8. Polyester nach einem der Ansprüche 1 bis 7, wobei das Molverhältnis von auf Disäure basierenden Bausteinen zur Summe von Diol-Bausteinen und Polyol-Bausteinen im Bereich von 1,5:1 bis 1:1,5 liegt.

9. Verfahren zur Herstellung eines Polyesters nach einem der Ansprüche 1 bis 8, das folgende Schritte umfasst:
(a) Umsetzen einer aktivierten α,β-ethylenisch ungesättigten Dicarbonsäure mit einer Mischung von mindestens einem Diol und mindestens einem Polyol, wobei die aktivierte ungesättigte Dicarbonsäure aus aktivierter Maleinsäure, aktivierter Itaconsäure und aktivierter Fumarsäure ausgewählt wird,
**dadurch gekennzeichnet, dass** das Molverhältnis von Carboxylgruppen von aktivierter α,β-ethylenisch ungesättigter Dicarbonsäure zur Summe von Hydroxylgruppen von Diol und Polyol im Bereich von 2:1 bis 1:2 liegt;
(b) Umsetzen des aus Schritt (a) erhaltenen Produkts mit R¹-NH₂.

10. Verfahren nach Anspruch 9, wobei das Molverhältnis von Hydroxylgruppen von Diol(en) und Polyol(en) im Bereich von 1:2 bis 2:1 liegt.

11. Verfahren nach Anspruch 9 oder 10, wobei die aktivierte α,β-ethylenisch ungesättigte Dicarbonsäure aus C₁-C₄-Alkyldiestern, Dichloriden und dem Anhydrid von Maleinsäureester und Itaconsäure und C₁-C₄-Alkyldiestern und dem Dichlorid von Fumarsäure ausgewählt wird.

12. Waschmittel, umfassend mindestens einen Polyester nach einem der Ansprüche 1 bis 8.

13. Waschmittel nach Anspruch 12, das zusätzlich mindestens ein anionisches Tensid, das aus linearen Alkylbenzolsulfonaten und alkoxylierten sulfonierten Fettalkoholen ausgewählt ist, umfasst und/oder zusätzlich mindestens ein Enzym umfasst.

14. Waschmittelzusammensetzung nach Anspruch 12 oder 13, wobei die Zusammensetzung bei Umgebungstemperatur flüssig oder gelartig ist.

15. Verfahren zur Konservierung von Waschmittel nach einem der Ansprüche 12 bis 14 gegen Mikrobenkontamination oder -wachstum, wobei das Verfahren das Zugeben von 2-Phenoxyethanol umfasst.

## Revendications

1. Polyester comprenant au moins un bloc de construction à base de diacide, au moins un bloc de construction à base de diol et au moins un bloc de construction à base de polyol, dans lequel le bloc de construction à base de diacide comprend un groupe de formule (I) 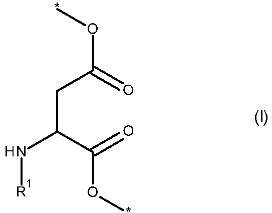
dans lequel R¹ est un groupe selon la formule générale CH₂-CH₂-O(AO)ₓ-X¹, x étant un nombre de zéro à 75, X¹ étant hydrogène ou méthyle et AO étant un oxyde d'alkylène choisi parmi l'oxyde d'éthylène et des combinaisons d'oxyde d'éthylène avec au moins l'un parmi l'oxyde de propylène et l'oxyde de butylène,
dans lequel les blocs de construction polyol sont dérivés de composés portant y groupes hydroxyle par molécule, et y étant au moins trois,
et dans lequel les astérisques indiquent des liaisons à des blocs de construction diol ou polyol par l'intermédiaire des atomes d'oxygène d'ester,
dans lequel le rapport molaire de blocs de construction à base de diacide sur la somme de blocs de construction diol et de blocs de construction polyol, ces derniers étant multipliés par 2/y, est dans la plage de 2:1 à 1:2.

2. Polyester selon la revendication 1, dans lequel x est zéro ou dans la plage de 1 à 30, la majorité de AO dans R¹ étant de l'oxyde d'éthylène.

3. Polyester selon la revendication 1 ou 2, ayant un poids moléculaire moyen Mₙ dans la plage de 3 000 à 5 000 g/mole, déterminé par chromatographie à perméation de gel.

4. Polyester selon l'une quelconque des revendications 1 à 3, comprenant en outre au moins un bloc de construction choisi parmi les acides dicarboxyliques en C₄-C₆ qui ne portent pas un groupe NH-R¹.

5. Polyester selon l'une quelconque des revendications 1 à 4, dans lequel le bloc de construction diol est à base d'éthylèneglycol, de diéthylèneglycol, de triéthylèneglycol, de 1,4-butanediol, de 1,6-hexanediol, de néopentylglycol, de 2,5-diméthyl-2,5-hexanediol ou de 2-éthyl-1,3-hexanediol ou à base de mélanges d'au moins deux des composés précédents.

6. Polyester selon l'une quelconque des revendications 1 à 5, dans lequel le composant polyol est choisi parmi les triols et les tétrols.

7. Polyester selon l'une quelconque des revendications 1 à 6, dans lequel le bloc de construction polyol est à base de glycérol, butane-1,2,4-triol, n-pentane-1,2,5-triol, n-pentane-1,3,5-triol, n-hexane-1,2,6-triol, n-hexane-1,2,5-triol, n-hexane-1,3,6-triol, 1,1,1-triméthylolbutane, 1,1,1-triméthylolpropane, 1,1,1-triméthyloléthane ou triméthylolméthane ou à base de mélanges d'au moins deux des composés précédents.

8. Polyester selon l'une quelconque des revendications 1 à 7, dans lequel le rapport molaire de blocs de construction à base de diacide sur la somme de blocs de construction diol et de blocs de construction polyol est dans la plage de 1,5:1 à 1:1,5.

9. Procédé pour la fabrication d'un polyester selon l'une quelconque des revendications 1 à 8 comprenant les étapes de
(a) mise en réaction d'un acide dicarboxylique α, β-éthyléniquement insaturé activé avec un mélange d'au moins un diol et d'au moins un polyol, dans lequel l'acide dicarboxylique insaturé activé est choisi parmi l'acide maléique activé, l'acide itaconique activé et l'acide fumarique activé,
**caractérisé en ce que** le rapport molaire de groupes carboxyle de l'acide dicarboxylique α,β-éthyléniquement insaturé activé sur la somme de groupes hydroxyle du diol et du polyol est dans la plage de 2:1 à 1:2 ;
(b) mise en réaction du produit issu de l'étape (a) avec R¹-NH₂.

10. Procédé selon la revendication 9, dans lequel le rapport molaire de groupes hydroxyle du ou des diols et du ou des polyols est dans la plage de 1:2 à 2:1.

11. Procédé selon la revendication 9 ou 10, dans lequel l'acide dicarboxylique α,β-éthyléniquement insaturé activé est choisi parmi les diesters d'alkyle en C₁-C₄, les dichlorures et l'anhydride d'ester maléique et d'acide itaconique et les diesters d'alkyle en C₁-C₄ et le dichlorure d'acide fumarique.

12. Détergent pour lessive comprenant au moins un polyester selon l'une quelconque des revendications 1 à 8.

13. Détergent pour lessive selon la revendication 12, comprenant en outre au moins un tensioactif anionique choisi parmi les alkylbenzènesulfonates linéaires et les alcools gras sulfonés alcoxylés et/ou comprenant en outre au moins une enzyme.

14. Composition de détergent pour lessive selon la revendication 12 ou 13, dans laquelle ladite composition est de type liquide ou gel à température ambiante.

15. Procédé de préservation d'un détergent pour lessive selon l'une quelconque des revendications 12 à 14 contre la contamination ou la croissance microbienne, lequel procédé comprend l'ajout de 2-phénoxyéthanol.
